# FASCICULE DE BREVET EUROPEEN

(11) **EP 2 378 197 B1**
(45) Date de publication et mention de la délivrance du brevet: **20.03.2019**
(21) Numéro de dépôt: 11305444.9
(22) Date de dépôt: 14.04.2011
(51) Int. Cl.: F23J 13/02, F23J 15/06

(54) **Conduit pour un circuit d'evacuation des produits de combustion et d'alimentation en air comburant dans une installation de fumisterie**
Leitung für eine Anlage zum Abführen von Verbrennungsprodukten und zum Zuführen von Verbrennungsluft
Conduit for a circuit exhausting combustion products and supplying combustion air

(30) Priorité: 16.04.2010 FR 1052904
(43) Date de publication de la demande: 19.10.2011
(73) Titulaire: Poujoulat, 79360 Granzay Gript (FR)
(72) Inventeur: Druette, Lionel, 79180 Chauray (FR); Pierre, Jean Luc, 79460 Magne (FR)
(74) Mandataire: Jacobacci Coralis Harle

(56) Documents cités:
- DE-U1- 9 308 512
- GB-A- 2 340 594
- US-B1- 6 390 185

## Description

La présente invention concerne le domaine général des installations de fumisterie ; elle concerne plus particulièrement un conduit à monter sur un circuit pour l'évacuation des produits de combustion et pour l'alimentation en air comburant, ledit circuit étant destiné à être connecté à un appareil de chauffage à bois du type poêle ou insert à bois (poêle ou insert à bûches ou à granulés de bois).

Pour leur fonctionnement optimal, les poêles ou les inserts à bois nécessitent une alimentation supplémentaire en air, dit « air comburant » (voir par exemple le document GB-2 340 594).

Une solution intéressante pour réaliser cette alimentation en air comburant consiste à utiliser un circuit d'évacuation des produits de combustion constitué d'un ensemble de conduits composés chacun de deux tubes concentriques, à savoir :
(i) un tube intérieur, formant une chambre centrale assurant l'évacuation des produits de combustion depuis l'appareil de chauffage à bois, et
(ii) un tube extérieur, définissant avec le tube intérieur en regard, une chambre périphérique annulaire pour le cheminement de l'air comburant provenant de l'extérieur, jusqu'à l'appareil de chauffage.

Dans le domaine des conduits d'évacuation de fumées on connait également du document DE-93 08 512 un conduit formé d'un tube interne et d'un tube externe définissant entre eux, une chambre externe intégrant des cloisons de séparation radiales.

Par ailleurs et selon un tout autre aspect, pour optimiser le rendement énergétique d'un appareil de chauffage dans une habitation individuelle, une approche habituelle consiste à récupérer au moins une partie de l'énergie thermique contenue dans les produits de combustion, de manière à restituer cette énergie dans une ou plusieurs pièces de l'habitat.

A cet effet, le circuit d'évacuation peut être équipé de moyens échangeur thermique de type air/air, raccordés à un circuit d'air à chauffer, assurant la récupération et la restitution de l'énergie thermique.

Le document US-6 390 185, décrit un dispositif de récupération d'énergie qui correspond au préambule de la revendication 1.

Or, à ce jour, il n'existe pas de moyens simples et efficaces permettant une telle récupération de l'énergie thermique sur un circuit d'évacuation avec chambre périphérique d'alimentation en air comburant.

Ayant identifié ce problème, la demanderesse a développé une structure originale de conduit pour circuit d'évacuation des produits de combustion d'un appareil de chauffage à bois (type poêle ou insert à bûches ou à granulés de bois), apte à assurer une alimentation en air comburant mais aussi à assurer une récupération/restitution d'énergie thermique.

Pour cela, le conduit selon l'invention, disposé verticalement ou sensiblement verticalement entre un tronçon de conduit inférieur raccordé à un appareil de chauffage à bois et un tronçon de conduit supérieur aboutissant à une sortie de bâtiment, comprend :
(i) une chambre centrale comportant deux orifices débouchants, l'un supérieur et l'autre inférieur, qui s'étendent tous deux coaxialement par rapport à l'axe dudit conduit, lesdits orifices débouchants étant, destinés à être raccordés à la chambre centrale du circuit d'évacuation pour autoriser le cheminement des produits de combustion à évacuer,
(ii) une chambre périphérique, entourant ladite chambre centrale, comportant deux orifices débouchants, l'un supérieur et l'autre inférieur, qui s'étendent tous deux coaxialement par rapport à l'axe dudit conduit, lesdits orifices débouchants étant destinés à être raccordés à la chambre périphérique dudit circuit d'évacuation pour autoriser le cheminement de l'air comburant depuis ledit orifice supérieur jusqu'audit orifice inférieur, et
(iii) une chambre intermédiaire, intercalée entre ladite chambre centrale et ladite chambre périphérique, comportant au moins deux orifices débouchants, lesdits orifices débouchants étant destinés à être raccordés à un circuit apte à générer un flux d'air au travers de ladite chambre intermédiaire et entre lesdits orifices débouchants, afin de récupérer et restituer une partie de l'énergie thermique contenue dans lesdits produits de combustion par transfert d'énergie thermique depuis ladite chambre centrale jusqu'à ladite chambre intermédiaire et, avantageusement, depuis ladite chambre périphérique jusqu'à ladite chambre intermédiaire ;
et ce conduit comprend encore :
- un tube central, délimité par une surface intérieure définissant ladite chambre centrale et par une surface extérieure, lequel tube central comporte deux extrémités, l'une supérieure et l'autre inférieure, définissant chacune l'un desdits orifices débouchants de ladite chambre centrale,
- un tube intermédiaire au sein duquel est logé ledit tube central, lequel tube intermédiaire, délimité par une surface extérieure et par une surface intérieure, comporte deux extrémités, l'une supérieure et l'autre inférieure, solidarisées de manière hermétique à l'air avec la surface extérieure dudit tube central associé, pour définir ensemble, entre eux, ladite chambre intermédiaire, lequel tube intermédiaire comporte lesdits deux orifices débouchants de ladite chambre intermédiaire qui sont ménagés à proximité desdites extrémités, et
- un tube périphérique au sein duquel sont logés ledit tube central et ledit tube intermédiaire, lequel tube périphérique est délimité par une surface extérieure et par une surface intérieure, laquelle surface intérieure définit la chambre périphérique avec les tubes en regard, lequel tube périphérique comporte deux extrémités, l'une supérieure et l'autre inférieure, agencées à distance des extrémités dudit tube central pour délimiter ensemble lesdits orifices annulaires débouchants de ladite chambre périphérique.
En outre, lesdits orifices de ladite chambre intermédiaire sont prolongés par des tronçons de tubes qui traversent ladite chambre périphérique et qui débouchent extérieurement au travers dudit tube périphérique.

L'extrémité supérieure du tube intermédiaire présente avantageusement une forme générale tronconique, de section croissante dans le sens extrémité supérieure vers extrémité inférieure dudit tube, et l'extrémité inférieure du tube périphérique comporte une partie de forme générale tronconique, de section décroissante dans le sens extrémité supérieure vers extrémité inférieure dudit tube, lesdites parties tronconiques optimisant le cheminement de l'air comburant le long de la chambre périphérique d'alimentation en air comburant.

Les orifices de la chambre intermédiaire de chauffage se situent avantageusement, l'un au niveau ou à proximité de l'extrémité supérieure du tube intermédiaire, et l'autre au niveau ou à proximité de son extrémité supérieure.

Selon une autre caractéristique, les orifices de la chambre intermédiaire sont avantageusement au nombre de deux, diamétralement opposée l'un par rapport à l'autre, lesquels orifices comportent chacun un axe longitudinal qui sont orientés parallèlement l'un par rapport à l'autre et radialement par rapport à l'axe longitudinal dudit conduit.

Encore selon une caractéristique, la chambre intermédiaire est avantageusement munie d'éléments de cloisonnement qui sont agencés pour la diviser longitudinalement en au moins deux parties, de sorte à optimiser la répartition de l'air à chauffer.
Dans ce cas, les éléments de cloisonnement sont avantageusement constitués par des profilés longitudinaux s'étendant chacun d'une manière radiale entre les surfaces en regard du tube central et du tube intermédiaire, cela sur une partie de la longueur de la chambre intermédiaire de chauffage ; et de préférence, ces éléments de cloisonnement sont au nombre de deux à dix, décalés les uns par rapport aux autres d'un secteur angulaire constant.
Toujours dans ce cas, la partie de la chambre intermédiaire de chauffage qui est située dans le prolongement de chacun de ses orifices est avantageusement dépourvue d'éléments de cloisonnement.

La présente invention porte encore sur l'installation de fumisterie pour habitat, comprenant au moins :
(i) un appareil de chauffage à bois en forme de poêle ou d'insert à bois,
(ii) un circuit d'évacuation des produits de combustion, comportant une chambre centrale, pour l'évacuation desdits produits de combustion générés par ledit appareil de chauffage à bois, et une chambre périphérique, pour l'alimentation en air comburant dudit appareil de chauffage, et
(iii) un circuit pour générer un flux d'air à chauffer, ces deux circuits étant raccordés à un conduit échangeur tel que décrit ci-dessus.

Dans ce cadre, selon une forme de réalisation préférée, le circuit pour générer le flux d'air à chauffer comporte :
- une partie de circuit raccordée au tronçon de tube qui prolonge l'un des orifices de la chambre intermédiaire du conduit, laquelle partie de circuit comporte un dispositif de ventilation mécanique contrôlée du type à double flux qui apporte de l'air provenant de l'extérieur jusqu'audit tronçon de tube, et
- une partie de circuit raccordée au tronçon de tube qui prolonge l'autre orifice de la chambre intermédiaire du conduit, laquelle partie de circuit comporte au moins une bouche pour la diffusion d'air réchauffé dans l'une des pièces de l'habitat.

L'invention sera encore illustrée, sans être aucunement limitée, par la description suivante d'une forme de réalisation particulière, en relation avec les dessins annexés dans lesquels :
- la figure 1 est une vue générale, et schématique, d'un circuit d'évacuation des produits de combustion, s'étendant depuis un poêle à bois jusqu'à une sortie de toit, et d'un circuit de récupération/restitution d'énergie thermique, lesdits circuits étant raccordés au conduit selon l'invention ;
- la figure 2 montre, de manière isolée, le conduit selon l'invention illustré ici selon un plan de coupe verticale passant par son axe longitudinal et par l'axe des orifices débouchants de la chambre de chauffage (le conduit est ici représenté selon une vue arrière par rapport à la figure 1) ;
- la figure 3 est une vue agrandie du conduit de la figure 2, selon un plan de coupe III-III orienté perpendiculairement à l'axe longitudinal ;
- la figure 4 est une vue schématique illustrant une installation de fumisterie conforme à l'invention, comprenant un poêle à bois, un conduit selon l'invention, et un circuit pour générer un flux d'air à chauffer comportant un dispositif de ventilation mécanique contrôlée du type à double flux.

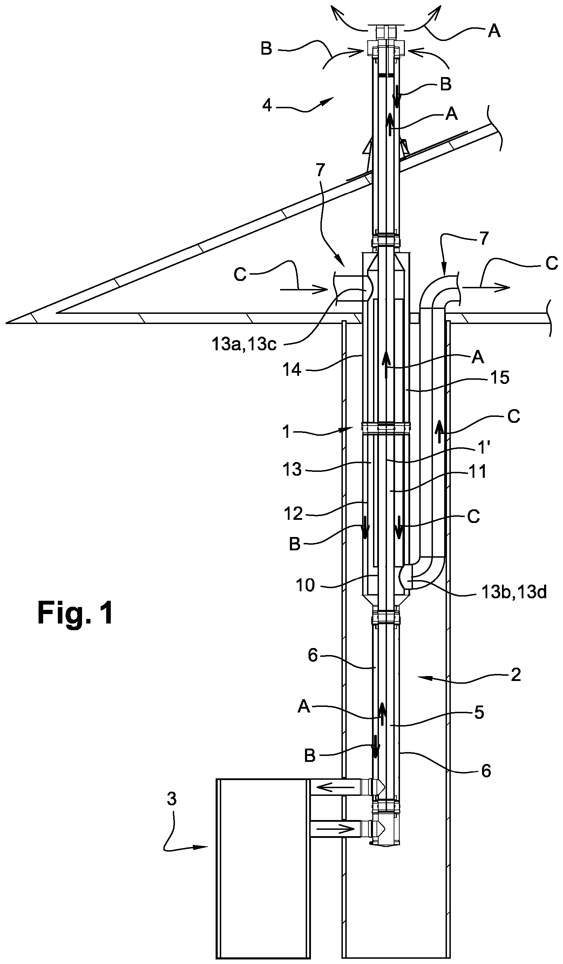

La figure 1 représente une installation de fumisterie pour habitat, équipée du conduit 1 selon l'invention.

Ce conduit 1 est implanté sur un circuit 2 pour l'évacuation des produits de combustion ; il s'étend au sein d'une gaine technique entre - un appareil de chauffage 3 utilisant le bois comme combustible, en particulier un poêle à bûches ou à granulés de bois (il pourrait aussi s'agir d'un insert ou foyer d'une cheminée) et - une sortie de toiture 4, constituée ici par une pièce couramment dénommée « terminal vertical ».

Ce circuit d'évacuation 2 est du type comportant (i) une chambre centrale 5, pour l'évacuation des produits de combustion générés par le poêle à bois 3 jusqu'au terminal 4, et (ii) une chambre périphérique 6 entourant ladite chambre centrale 5, pour l'alimentation en air comburant dudit poêle à bois 3 depuis le terminal 4.

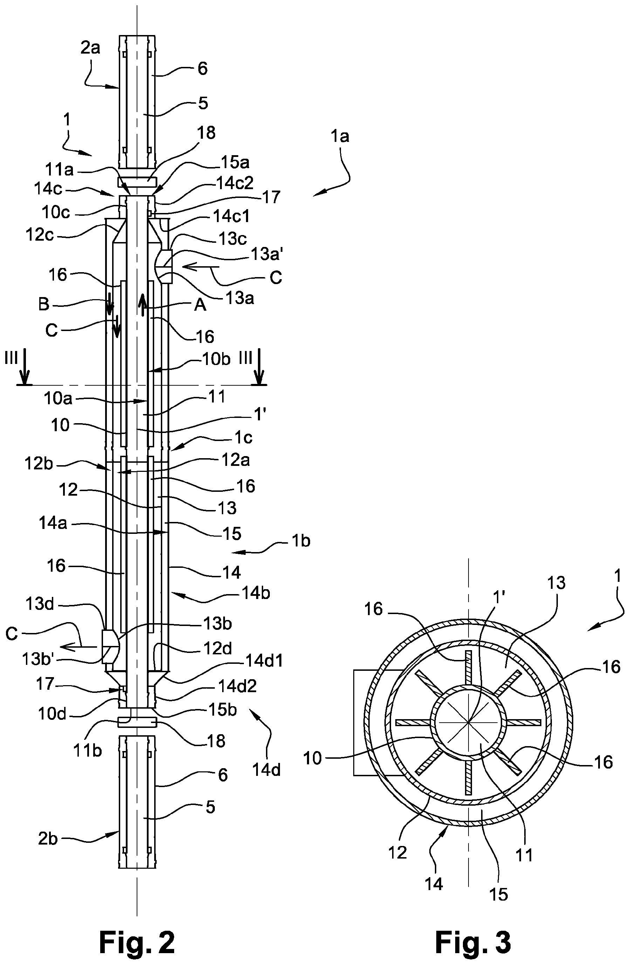

Pour faciliter la compréhension, le flux des produits de combustion et le flux d'air comburant sont schématisés par des flèches sur les figures 1 et 2, désignées respectivement par les repères A et B.

Selon l'invention, le conduit 1 est également raccordé à un circuit 7 apte à générer un flux d'air traversant, afin de récupérer et restituer une partie de l'énergie thermique contenue dans les produits de combustion cheminant le long du circuit d'évacuation 2 (au travers du conduit 1).

Encore pour faciliter la compréhension, le flux d'air traversant est également schématisé par des flèches sur les figures 1 et 2, désignées par le repère C.

La structure de ce conduit 1 est décrite plus en détail ci-dessous en relation avec les figures 2 et 3.

Ce conduit 1 assure, simultanément, (i) une circulation des produits de combustion, (ii) une alimentation en air comburant, et (iii) un échange thermique du type air/air avec les produits de combustion et avec l'air comburant, pour la récupération/restauration d'énergie thermique.

Dans la suite de la description, ce conduit 1 sera ainsi encore désigné sous l'appellation de « conduit échangeur ».

Pour cela, le conduit 1 est constitué de trois tubes, à savoir :
(i) un tube central 10, délimitant une chambre centrale 11 adaptée pour le cheminement des produits de combustion A,
(ii) un tube intermédiaire 12 au sein duquel est logé le tube central 10 et définissant ensemble, entre eux, une chambre intermédiaire 13 pour le cheminement de l'air C destiné à récupérer une partie de l'énergie thermique, et
(iii) un tube périphérique 14, entourant le tube central 10 et le tube intermédiaire 12, pour définir une chambre périphérique 15 adaptée pour le cheminement de l'air comburant B.

Ces trois tubes 10, 12 et 14 sont agencés coaxialement les uns par rapport aux autres, selon un axe longitudinal 1'.

Dans la suite de la présente description, on utilisera les termes « supérieur » et « inférieur », tenant compte de l'orientation de ce conduit échangeur 1 une fois installé sur le circuit d'évacuation 2.

Le tube central 10 consiste en une pièce tubulaire, réalisée dans un matériau non isolant thermique, par exemple en acier inoxydable.

Ce tube central 10, de forme cylindrique, est délimité par une surface intérieure 10a et par une surface extérieure 10b ; il comporte deux extrémités cylindriques, l'une supérieure 10c et l'autre inférieure 10d.

La surface intérieure 10a définit la chambre centrale 11 ; les extrémités 10c et 10d de ce tube central 10 définissent chacune un orifice débouchant circulaire de cette chambre centrale 11, respectivement un orifice supérieur 11a et un orifice inférieur 11b.

Les orifices débouchants 11a et 11b s'étendent coaxialement par rapport à l'axe 1' du conduit 1.
Ils sont destinés à être raccordés à la chambre centrale 5 de tronçons de conduits supérieur 2a et inférieur 2b du circuit d'évacuation 2, pour le cheminement des produits de combustion. Le tronçon de conduit supérieur 2a aboutit à la sortie de bâtiment 4, ou constitue cette sortie 4. Le tronçon de conduit inférieur 2b vient se raccorder au poêle à bois 3.

Le tube intermédiaire 12 présente également une forme cylindrique, délimité par une surface intérieure 12a et une surface extérieure 12b.

Ce tube intermédiaire 12 comporte deux extrémités, l'une supérieure 12c et l'autre inférieure 12d, formant chacune un rétreint venant épouser la surface extérieure 10b du tube central 10.

En l'occurrence, le tube intermédiaire 12 comporte (i) une extrémité supérieure 12c de forme générale tronconique, et (ii) une extrémité inférieure 12d en forme d'épaulement annulaire ou de couronne.
Comme développé par la suite, la forme de l'extrémité supérieure 12c de ce tube intermédiaire 12, de section croissante vers l'extrémité inférieure 12d, est adaptée notamment pour optimiser la circulation de l'air comburant au travers de la chambre périphérique 15.

Les extrémités 12c et 12d du tube intermédiaire 12 sont solidarisées, de manière hermétique à l'air, avec la surface extérieure 10b du tube central 10.

La surface intérieure 12a du tube intermédiaire 12 et la surface extérieure 10b du tube central 10, agencées en regard et à distance l'une de l'autre, définissent ainsi ensemble la chambre intermédiaire 13, dite encore « chambre de chauffage », de section en forme générale de couronne (figure 3).
Cette chambre de chauffage 13 est terminée par les extrémités 12c et 12d du tube intermédiaire 12.

Le tube intermédiaire 12 comporte deux orifices débouchants 13a et 13b, destinés à assurer le raccordement de la chambre de chauffage 13 avec le circuit d'air à chauffer 7.

Les orifices débouchants 13a et 13b sont prolongés par des tronçons de tubes cylindriques 13c et 13d, respectivement, qui s'étendent au travers du tube intermédiaire 12 et du tube périphérique 14 ; ces tronçons de tubes 13c et 13d traversent encore la chambre périphérique 15.

Les orifices débouchants 13a et 13b sont ménagés chacun au niveau, ou à proximité, de l'une des extrémités du tube intermédiaire 12 :
(i) un orifice supérieur 13a est ménagé au niveau de l'extrémité supérieure 12c du tube intermédiaire 12, et
(ii) un orifice inférieur 13b est ménagé au niveau de l'extrémité inférieure 12d du tube intermédiaire 12.

Ces orifices 13a et 13b sont agencés de manière diamétralement opposée l'un par rapport à l'autre. Ils comportent chacun un axe longitudinal 13a' et 13b', qui sont orientés parallèlement l'un par rapport à l'autre et radialement/perpendiculairement par rapport à l'axe longitudinal 1' du conduit échangeur1.

La chambre de chauffage 13 est munie d'éléments de cloisonnement 16 qui sont répartis sur sa circonférence et qui s'étendent entre les deux orifices débouchants 13a et 13b, pour que l'air à chauffer soit convenablement réparti et vienne au contact d'une surface maximale du tube central 10.
Ces éléments de cloisonnement 16 optimisent ainsi les échanges thermiques entre, d'une part, l'air circulant dans la chambre de chauffage 13 et, d'autre part, les produits de combustion cheminant dans la chambre centrale 11 et éventuellement l'air comburant cheminant dans la chambre périphérique 15.

Les éléments de cloisonnement 16 consistent pour cela en une pluralité de profilés rectilignes plats et rectangulaires, ici au nombre de huit, qui s'étendent chacun de manière radiale entre les faces en regard 10b et 12a des tubes 10 et 12 qui délimitent la chambre de chauffage 13.

Tel que représenté sur la figure 3, ces éléments de cloisonnement 16 sont régulièrement répartis autour de l'axe longitudinal 1' du conduit 1, et écartés les uns par rapport aux autres d'un secteur angulaire constant.

De plus, ces éléments de cloisonnement 16 s'étendent chacun sur une partie seulement de la hauteur de la chambre de chauffage 13. En effet, ils ne s'étendent pas jusqu'aux bordures d'extrémités 12c et 12d du tube intermédiaire 12 ; et la partie de hauteur de la chambre de chauffage 13 située dans le prolongement de chacun de ses orifices 13a et 13b est dépourvue d'éléments de cloisonnement 16.

Les éléments de cloisonnement 16 divisent ainsi longitudinalement la chambre de chauffage 13 en plusieurs parties, chacune en forme d'arc de couronne, connectées entre elles au niveau des orifices débouchants 13a et 13b.

Selon une variante de réalisation non représentée, les orifices 13a et 13b de la chambre de chauffage 13 sont coaxiaux l'un par rapport à l'autre ; et ils sont agencés, d'une manière diamétralement opposée par rapport à l'axe longitudinal 1', au niveau de l'extrémité supérieure 12c du tube intermédiaire 12. Les éléments de cloisonnement 16 s'étendent alors entre ces deux orifices 13a et 13b, tout en laissant un passage pour l'air au niveau de l'extrémité inférieure 12d du tube intermédiaire 12, pour assurer le cheminement de l'air à chauffer sur la hauteur de la chambre intermédiaire 13.

De préférence, les éléments de cloisonnement 16 sont soudés sur chant contre la face externe 10b du tube central 10.

Le tube périphérique 14 présente également une forme générale cylindrique, délimitée par une surface intérieure 14a et une surface extérieure 14b. La surface intérieure 14a du tube périphérique 14 et la surface extérieure 12b du tube intermédiaire 12, agencées en regard et à distance l'une de l'autre, définissent ainsi ensemble la chambre périphérique 15 présentant une section en forme générale de couronne (figure 3).

Ce tube périphérique 14 se termine par deux extrémités, l'une supérieure 14c et l'autre inférieure 14d, formant chacune un rétreint venant s'étendre parallèlement et à distance de la surface extérieure des extrémités supérieure 10c et inférieure 10d du tube central 10.

Ces extrémités supérieure 14c et inférieure 14d du tube périphérique 14 définissent ainsi, avec les extrémités supérieure 10c et inférieure 10d du tube central 10 en regard, des orifices débouchant 15a et 15b de la chambre périphérique 15.
Ces orifices supérieur 15a et inférieur 15b de la chambre périphérique 15 sont destinés à être connectés à la chambre périphérique 6 des tronçons de conduits supérieur 2a et inférieur 2b du circuit d'évacuation 2.

Plus précisément, l'extrémité supérieure 14c du tube périphérique 14 comporte ici une partie 14c1 formant rétreint proprement dit, en forme générale d'épaulement annulaire ou de couronne, dont la bordure intérieure est prolongée par une partie cylindrique 14c2 s'étendant en regard de l'extrémité supérieure 10c du tube central 10.
Cette partie cylindrique 14c2 du tube périphérique 14 et l'extrémité supérieure en regard 10c du tube central 10 définissent ainsi l'orifice débouchant supérieur annulaire 15a de la chambre périphérique 15.

L'extrémité inférieure 14d du tube périphérique 14 comporte quant à elle une partie de forme générale tronconique 14d1, de section décroissante vers l'extrémité inférieure du conduit, prolongée par une partie cylindrique 14d2. Cette dernière délimite, avec l'extrémité inférieure en regard 10d du tube central 10, l'orifice débouchant annulaire inférieur 15b de la chambre périphérique 15.

Comme développé par la suite, la forme tronconique de l'extrémité inférieure 14d du tube périphérique 14 permet un déplacement optimisé du flux de l'air comburant depuis l'orifice supérieur 15a jusqu'à l'orifice inférieur 15b de la chambre périphérique 15.
On note encore que ces orifices supérieur 15a et inférieur 15b sont orientés coaxialement par rapport à l'axe longitudinal 1' du conduit échangeur 1.

Le tube périphérique 14 est solidarisé avec le tube central 10 par l'intermédiaire de pièces de centrage radiales 17, ménagées au niveau de leurs extrémités 14c, 14d et 10c, 10d en regard.

Dans un souci d'industrialisation, le conduit échangeur thermique 1 est avantageusement réalisé en deux parties, l'une supérieure 1a et l'autre inférieure 1b, constituant chacune approximativement la moitié de la hauteur ou longueur dudit conduit échangeur 1 (et approximativement la moitié de la longueur des tubes 10, 12 et 14).
Ces deux parties 1a et 1b sont assemblées, de manière hermétique à l'air, au niveau d'une extrémité centrale commune 1c, par des structures complémentaires d'emboîtement ménagés au niveau de chacun des tubes 10, 12 et 14.
Une telle structure permet en plus de concevoir un conduit échangeur 1 de grande longueur, utile pour optimiser le rendement énergétique.

De manière alternative, le conduit échangeur 1 peut être réalisé en une seule partie, sans la partie centrale d'emboîtement 1c.

A titre indicatif, la chambre centrale 11 a un diamètre compris entre 80 et 150 mm, la chambre intermédiaire 13 a une épaisseur radiale comprise entre 20 et 50 mm, et la chambre périphérique 15 a une épaisseur radiale comprise entre 25 et 35 mm.

En pratique, le conduit échangeur thermique 1 est installé sur un conduit d'évacuation des fumées 2, de sorte à être raccordé à une partie ou à un tronçon supérieur 2a (côté terminal 4) et à une partie ou tronçon inférieur 2b (côté poêle à bois 3) de ce circuit 2.

Pour cela, l'extrémité de cette partie supérieure 2a et l'extrémité de cette partie inférieure 2b du circuit 2 sont respectivement emmanchées ou assemblées, de manière hermétique à l'air, sur les extrémités supérieures 10c, 14c et inférieures 10d, 14d de ce conduit échangeur 1.

Cet assemblage, par emboîtement du type mâle/femelle, est ensuite verrouillé au moyen de tout dispositif mécanique adapté, par exemple au moyen d'un collier de serrage 18.

Une fois connectés, les orifices débouchants 11a et 11b de la chambre centrale 11 sont raccordés à la chambre centrale 5 du circuit d'évacuation 2, pour autoriser le cheminement ascendant des produits de combustion depuis l'orifice inférieur 11b vers l'orifice supérieur 11a. La flèche A sur la figure 2 illustre ce sens de cheminement.

De même, les orifices débouchants 15a et 15b de la chambre périphérique 15 sont raccordés à la chambre périphérique 6 du circuit d'évacuation 2, pour autoriser le cheminement descendant de l'air comburant depuis l'orifice supérieur 15a vers l'orifice inférieur 15b (en sens inverse par rapport aux produits de combustion). La flèche B sur la figure 2 illustre ce sens de cheminement.
Les surfaces tronconiques 12c et 14d1 assurent un cheminement optimal de l'air comburant, et sa déflection au niveau des changements de diamètres de la chambre périphérique 15.

Pour générer le courant d'air traversant la chambre de chauffage 13, les tronçons de tubes 13c et 13d qui équipent les orifices débouchants 13a et 13b du conduit échangeur 1 sont raccordés au circuit d'air à chauffer 7 dont la structure est adaptée à l'habitation à équiper.

Ce cheminement de l'air à chauffer dans la chambre intermédiaire 13 est représenté de manière schématique sur la figure 2, en l'occurrence par la flèche C. Ce flux est ici descendant.

Ce cheminement s'effectue depuis l'orifice supérieur 13b vers l'orifice inférieur 13a, c'est-à-dire en sens inverse par rapport aux produits de combustion pour favoriser la récupération de l'énergie thermique

De plus, les éléments de cloisonnement 16 assurent une répartition de l'air sur toute la circonférence de la chambre intermédiaire 16, pour favoriser encore la récupération thermique au travers du tube centrale 10 ; les éléments de cloisonnement 16, eux-mêmes chauffés, participent aussi à la récupération thermique recherchée.

Ce cheminement d'air peut être activé manuellement ou automatiquement, lorsque les produits de combustion cheminent au travers de la chambre centrale 10, de sorte à récupérer et restituer leur énergie thermique.

Un tel cheminement de l'air à chauffer C, entre les produits de combustion A et l'air comburant B, assure une récupération optimale de l'énergie thermique.
La circulation de l'air comburant B autour de la chambre intermédiaire 13 joue encore un rôle efficace d'isolant thermique, limitant la montée en température du tube périphérique 14. De plus, l'air comburant (chauffé en amont par les produits de combustion) est plus chaud que l'air à chauffer C, et il participe aussi à la récupération thermique recherchée.

Le conduit échangeur 1 selon l'invention est de structure simple et il permet une récupération efficace des calories ; ce conduit 1 présente de nombreux avantages et notamment :
- il évite la mise en dépression du circuit d'évacuation des produits de combustion,
- il limite la température des produits de combustion à l'entrée du circuit d'évacuation des fumées,
- il protège le moteur de ventilation d'éventuelles surchauffes.

L'air chaud distribué est propre, sans risque de poussières ou de salissures issues du foyer.

Ce conduit échangeur est conçu notamment pour pouvoir équiper des poêles à bûches ou à granulés de bois (ou les inserts à bois) dans les maisons à faible consommation d'énergie.

En l'occurrence, l'orifice supérieur 13a, formant orifice d'entrée d'air, peut être raccordé à un circuit comportant (i) un orifice pour prélever l'air dans la pièce d'habitation où le poêle à bois 3 est situé, et (ii) un moteur de ventilation assurant le cheminement de l'air à chauffer. Le second orifice débouchant 13b, formant orifice de sortie, est quant à lui connecté à un réseau de conduits de ventilation desservant une ou plusieurs pièces principales du logement avec l'air chauffé.

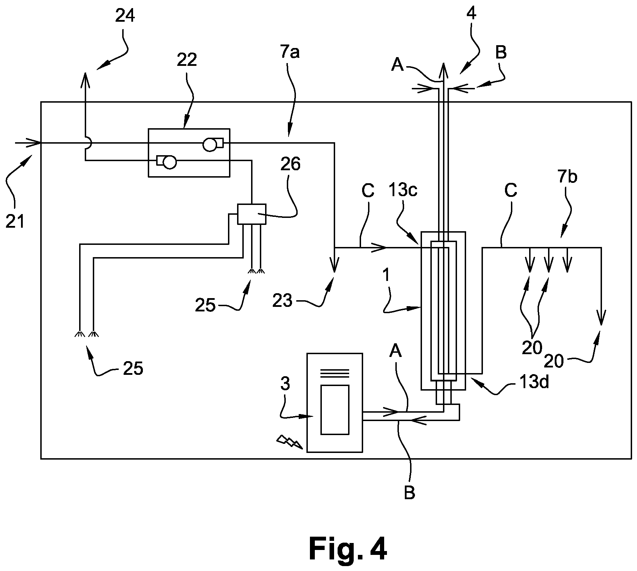

Dans une forme de réalisation préférée, illustrée schématiquement sur la figure 4, le poêle à bois 3 est équipé du conduit échangeur 1 couplé à un dispositif de ventilation mécanique contrôlée du type à double flux.

Comme on peut le voir sur cette figure 4, le conduit échangeur 1 équipe un poêle à bois 3 qui génère des produits de combustion (flèche A) évacués par la sortie 4 et qui reçoit de l'air comburant provenant de l'extérieur (flèche B).
L'air à chauffer (flèche C) chemine selon un circuit 7 qui comprend une première partie 7a, en amont du conduit échangeur 1 (alimentant ce conduit échangeur 1 par sa connexion au tronçon de tube 13c), et une seconde partie 7b, en aval du conduit échangeur 1 (connectée au tronçon de tube 13d), et conduisant l'air chauffé jusqu'à différentes bouches 20 pour sa diffusion par exemple dans plusieurs pièces de vie de l'habitat (chambres notamment).

La première partie 7a du conduit 7 alimente en air neuf le conduit échangeur 1 (prélevé par exemple à l'extérieur de l'habitat par une entrée 21), au moyen d'un dispositif de ventilation mécanique contrôlée (VMC) du type à double flux 22. L'un des moteurs de ventilation de la VMC double flux 22 assure l'envoi de l'air neuf dans le conduit échangeur 1 et la diffusion de l'air chauffé jusqu'aux bouches 20 ; il peut aussi, comme illustré sur la figure 4, assurer l'arrivée d'air neuf dans la pièce où se situe le poêle à bois 3 (arrivée d'air 23).
Le second moteur de ventilation de la VMC double flux 22 assure l'extraction vers l'extérieur (sortie 24) de l'air provenant des pièces de service 25 (toilettes, salle de bains...), récupéré par le collecteur 26.

Dans une telle installation, dans laquelle le conduit échangeur 1 est couplé à une VMC double flux, les calories récupérées dans l'échangeur thermique sont véhiculées dans l'habitation sans rajout d'un autre circuit de distribution.

Le conduit échangeur 1 selon l'invention peut aussi être associé à une circulation du type simple flux, couplée ou non à la ventilation de l'habitation.

D'une manière générale, la ventilation couplée à l'échangeur thermique conforme à l'invention permet de bien répartir la chaleur du poêle à bois qui, sans ce dispositif, est cantonné dans la pièce où est situé l'appareil de chauffage, avec un risque de surchauffe et donc d'inconfort dans ladite pièce.

## Revendications

1. Conduit pour un circuit (2) d'une installation de fumisterie, lequel conduit (1) s'étend verticalement ou sensiblement verticalement entre un tronçon de conduit inférieur (2b) raccordé à un appareil de chauffage à bois (3), type poêle ou insert à bois, et un tronçon de conduit supérieur (2a) aboutissant à une sortie de bâtiment (4), ledit circuit (2) comportant - une chambre centrale (5) pour l'évacuation des produits de combustion générés par ledit appareil de chauffage à bois (3), et - une chambre périphérique (6) pour l'alimentation en air comburant dudit appareil de chauffage (3),
lequel conduit (1) comprend :
(i) une chambre centrale (11) comportant deux orifices débouchants, l'un supérieur (11a) et l'autre inférieur (11b), qui s'étendent tous deux coaxialement par rapport à l'axe (1') dudit conduit (1), lesdits orifices débouchants (11a, 11b) étant destinés à être raccordés à ladite chambre centrale (5) dudit circuit d'évacuation (2) pour autoriser le cheminement desdits produits de combustion à évacuer,
(ii) une chambre périphérique (15), entourant ladite chambre centrale (11), comportant deux orifices annulaires débouchants, l'un supérieur (15a) et l'autre inférieur (15b), qui s'étendent tous deux coaxialement par rapport à l'axe (1') du conduit (1), lesdits orifices débouchants (15a, 15b) étant destinés à être raccordés à ladite chambre périphérique (6) dudit circuit d'évacuation (2) pour autoriser le cheminement de l'air comburant, et
(iii) une chambre intermédiaire (13), intercalée entre ladite chambre centrale (11) et ladite chambre périphérique (15), comportant au moins deux orifices débouchants (13a, 13b), lesdits orifices (13a, 13b) étant destinés à être raccordés à un circuit (7) apte à générer un flux d'air au travers de ladite chambre intermédiaire (13) et entre lesdits orifices débouchants (13a, 13b), afin de récupérer et restituer une partie de l'énergie thermique contenue dans lesdits produits de combustion par transfert d'énergie thermique au moins depuis ladite chambre centrale (11) jusqu'à ladite chambre intermédiaire (13),
lequel conduit (1) comprend encore :
- un tube central (10), délimité par une surface intérieure (10a) définissant ladite chambre centrale (11) et par une surface extérieure (10b), lequel tube central (10) comporte deux extrémités, l'une supérieure (10c) et l'autre inférieure (10d), définissant chacune l'un desdits orifices débouchants (11a, 11b) de ladite chambre centrale (11),
- un tube intermédiaire (12) au sein duquel est logé ledit tube central (10), lequel tube intermédiaire (12), délimité par une surface intérieure (12a) et par une surface extérieure (12b), comporte deux extrémités, l'une supérieure (12c) et l'autre inférieure (12d), solidarisées de manière hermétique à l'air avec la surface extérieure (10b) dudit tube central associé (10), pour définir ensemble, entre eux, ladite chambre intermédiaire (13), lequel tube intermédiaire (12) comporte lesdits deux orifices débouchants (13a, 13b) de ladite chambre intermédiaire (13) qui sont ménagés à proximité desdites extrémités (12c, 12d), et
- un tube périphérique (14) au sein duquel sont logés ledit tube central (10) et ledit tube intermédiaire (12), lequel tube périphérique (14) est délimité par une surface extérieure (14b) et par une surface intérieure (14a),
**caractérisé en ce que** ladite surface intérieure (14a) définit la chambre périphérique (15) avec les tubes en regard (10, 12),
ledit tube périphérique (14) comporte deux extrémités, l'une supérieure (14c) et l'autre inférieure (14d), agencées à distance des extrémités (10c, 10d) dudit tube central (10) pour délimiter ensemble lesdits orifices annulaires débouchants (15a, 15b) de ladite chambre périphérique (15),
et **en ce que** lesdits orifices (13a, 13b) de ladite chambre intermédiaire (13) sont prolongés par des tronçons de tubes (13c, 13d) qui traversent la chambre périphérique (15) et qui débouchent extérieurement au travers du tube périphérique (14).

2. Conduit selon la revendication 1, **caractérisé en ce que** l'extrémité supérieure (12c) du tube intermédiaire (12) présente une forme générale tronconique, de section croissante dans le sens extrémité supérieure (12c) vers extrémité inférieure (12d) dudit tube (12), et **en ce que** l'extrémité inférieure (14d) du tube périphérique (14) comporte une partie (14d1) de forme générale tronconique, de section décroissante dans le sens extrémité supérieure (14c) vers extrémité inférieure (14d) dudit tube (14), lesdites parties tronconiques (12c, 14d) optimisant le cheminement de l'air comburant le long de la chambre périphérique (15).

3. Conduit selon l'une quelconque des revendications 1 ou 2, **caractérisé en ce que** les orifices (13a, 13b) de la chambre intermédiaire (13) se situent, l'un (13a) au niveau, ou à proximité, de l'extrémité supérieure (12c) du tube intermédiaire (12) et l'autre (13b) au niveau, ou à proximité de l'extrémité inférieure (12d) dudit tube intermédiaire (12).

4. Conduit selon l'une quelconque des revendications 1 à 3, **caractérisé en ce que** les orifices (13a, 13b) de la chambre intermédiaire (13) sont au nombre de deux, diamétralement opposée l'un par rapport à l'autre, lesquels orifices (13a, 13b) comportent chacun un axe longitudinal (13a', 13b'), qui sont orientés parallèlement l'un par rapport à l'autre et radialement par rapport à l'axe longitudinal (1') dudit conduit (1).

5. Conduit selon l'une quelconque des revendications 1 à 4, **caractérisé en ce que** la chambre intermédiaire (13) est munie d'éléments de cloisonnement (16) qui sont agencés pour la diviser longitudinalement en au moins deux parties, de sorte à optimiser la répartition de l'air à chauffer.

6. Conduit selon la revendication 5, **caractérisé en ce que** les éléments de cloisonnement (16) sont constitués par des profilés longitudinaux s'étendant chacun d'une manière radiale entre les surfaces (10b, 12a) en regard du tube central (10) et du tube intermédiaire (12), cela sur une partie de la longueur de la chambre intermédiaire (13).

7. Conduit selon la revendication 6, **caractérisé en ce que** les éléments de cloisonnement (16) sont au nombre de deux à dix, décalés les uns par rapport aux autres d'un secteur angulaire constant.

8. Conduit selon l'une quelconque des revendications 5 à 7, **caractérisé en ce que** la partie de la chambre intermédiaire (13) située dans le prolongement de chacun de ses orifices (13a, 13b) est dépourvue d'éléments de cloisonnement (16).

9. Installation de fumisterie pour habitat, comprenant au moins :
(i) un appareil de chauffage à bois (3), type poêle ou insert à bois,
(ii) un circuit (2) comportant une chambre centrale (5), pour l'évacuation des produits de combustion générés par ledit appareil de chauffage à bois (3), et une chambre périphérique (6), pour l'alimentation en air comburant dudit appareil de chauffage (3), et
(iii) un circuit (7) pour générer un flux d'air à chauffer, **caractérisée en ce que** lesdits circuits (2, 7) sont raccordés à un conduit (1) selon l'une quelconque des revendications 1 à 8.

10. Installation de fumisterie pour habitat, selon la revendication 9, **caractérisée en ce que** ledit circuit (7) comporte :
- une partie de circuit (7a) raccordée au tronçon de tube (13c) qui prolonge l'un des orifices (13a) de la chambre intermédiaire (13), laquelle partie de circuit (7a) comporte un dispositif de ventilation, mécanique contrôlée du type à double flux (22) qui apporte de l'air provenant de l'extérieur jusqu'audit tronçon de tube (13c), et.
- une partie de circuit (7b) raccordée au tronçon de tube (13d) qui prolonge l'autre orifice (13b) de la chambre intermédiaire (13), laquelle partie de circuit (7b) comporte au moins une bouche (20) pour la diffusion d'air réchauffé dans l'une des pièces de l'habitat.

## Patentansprüche

1. Leitung für einen Kreis (2) einer Feuerungsanlage, wobei sich die Leitung (1) senkrecht oder im Wesentlichen senkrecht zwischen einem mit einem Holzheizungsgerät (3) vom Typ eines Ofens oder eines Kassetteneinsatzes für Holz verbundenen unteren Leitungsabschnitt (2b) und einem an einem Gebäudeaustritt (4) endenden oberen Leitungsabschnitt (2a) erstreckt, wobei der Kreis (2) - eine zentrale Kammer (5) zum Abführen von vom Holzheizungsgerät (3) erzeugten Verbrennungsprodukten und - eine Umfangskammer (6) zum Zuführen von Verbrennungsluft für das besagte Heizgerät (3) aufweist,
wobei die Leitung (1)
(i) eine zentrale Kammer (11) mit zwei Durchtrittsöffnungen, einer oberen (11a) und einer unteren (11b), die sich in Bezug auf die Achse (1') der Leitung (1) beide koaxial erstrecken, wobei die Durchtrittsöffnungen (11a, 11b) dazu bestimmt sind, mit der zentralen Kammer (5) des Abführkreises (2) verbunden zu werden, um den Durchfluß der abzuführenden Verbrennungsprodukte zu ermöglichen,
(ii) eine Umfangskammer (15), die die zentrale Kammer (11) umgibt, die zwei ringförmige Durchtrittsöffnungen, eine obere (15a) und eine untere (15b), aufweist, die sich in Bezug auf die Achse (1') der Leitung (1) beide koaxial erstrecken, wobei die Durchtrittsöffnungen (15a, 15b) dazu bestimmt sind, mit der Umfangskammer (6) des Abführkreises (2) verbunden zu werden, um den Durchfluß der Verbrennungsluft zu ermöglichen,
(iii) eine Zwischenkammer (13), die zwischen der zentralen Kammer (11) und der Umfangskammer (15) eingefügt ist, die wenigstens zwei Durchgangsöffnungen (13a, 13b) aufweist, wobei die Öffnungen (13a, 13b) dazu bestimmt sind, mit einem Kreis (7) verbunden zu werden, der geeignet ist, einen Luftstrom durch die Zwischenkammer (13) und zwischen den Durchtrittsöffnungen (13a, 13b) zu erzeugen, um einen Teil der in den Verbrennungsprodukten enthaltenen Wärmeenergie durch Übertragung der Wärmeenergie mindestens von der zentralen Kammer (11) bis zur Zwischenkammer (13) aufzufangen und wieder abzugeben,
aufweist,
wobei die Leitung (1) außerdem
- ein zentrales Rohr (10), das durch eine Innenfläche (10a), die die zentrale Kammer definiert, und eine Außenfläche (10b) begrenzt ist, wobei das zentrale Rohr (10) zwei Enden aufweist, ein oberes (10c) und ein unteres (10d), wobei jedes eine der Durchtrittsöffnungen (11a, 11b) der zentralen Kammer (11) definiert,
- ein Zwischenrohr (12), in dem das zentrale Rohr (10) angeordnet ist, wobei das Zwischenrohr (12), das durch eine Innenfläche (12a) und eine Außenfläche (12b) begrenzt ist, zwei Enden aufweist, ein oberes (12c) und ein unteres (12d), die mit der Außenfläche (10b) des zugehörigen zentralen Rohrs (10) luftdicht verbunden sind, um gemeinsam unter sich die Zwischenkammer (13) zu definieren, wobei das Zwischenrohr (12) die beiden Durchtrittsöffnungen (13a, 13b) der Zwischenkammer (13) aufweist, die in der Nähe der besagten Enden (12c, 12d) ausgebildet sind, und
- ein Umfangsrohr (14), in dem das zentrale Rohr (10) und das Zwischenrohr (12) angeordnet sind, wobei das Umfangsrohr (14) durch eine Außenfläche (14b) und eine Innenfläche (14a) begrenzt ist,
aufweist,
**dadurch gekennzeichnet, daß** die Innenfläche (14a) die Umfangskammer (15) mit den gegenüberliegenden Rohren (10, 12) definiert,
daß das Umfangsrohr (14) zwei Enden, ein oberes (14c) und ein unteres (14d), aufweist, die von den Enden (10c, 10d) des zentralen Rohrs (10) entfernt angeordnet sind, um gemeinsam die ringförmigen Durchtrittsöffnungen (15a, 15b) der Umfangskammer (15) zu begrenzen,
und daß die Öffnungen (13a, 13b) der Zwischenkammer (13) durch Rohrabschnitte (13c, 13d) verlängert sind, die die Umfangskammer (15) durchqueren und nach außen durch das Umfangsrohr (14) münden.

2. Leitung gemäß Anspruch 1, **dadurch gekennzeichnet, daß** das obere Ende (12c) des Zwischenrohrs (12) die allgemeine Form eines Kegelstumpfs mit einem vom oberen Ende (12c) zum unteren Ende (12d) des Rohrs (12) hin größer werdenden Querschnitt aufweist und daß das untere Ende (14d) des Umfangsrohrs (14) einen Teil (14d1) mit der allgemeinen Form eines Kegelstupfs mit vom oberen Ende (14c) zum unteren Ende (14d) des Rohrs (14) hin kleiner werdenden Querschnitt aufweist, wobei die kegelstumpfförmigen Teile (12c, 14d) die Wegführung der Verbrennungsluft entlang der Umfangskammer (15) optimieren.

3. Leitung gemäß Anspruch 1 oder 2, **dadurch gekennzeichnet, daß** von den Öffnungen (13a, 13b) der Zwischenkammer (13) die eine (13a) im Bereich oder in der Nähe des oberen Endes (12c) des Zwischenrohrs (12) und die andere im Bereich oder in der Nähe des unteren Endes (12d) des Zwischenrohrs (12) angeordnet ist.

4. Leitung gemäß einem der Ansprüche 1 bis 3, **dadurch gekennzeichnet, daß** die Öffnungen (13a, 13b) der Zwischenkammer (13) zu zweit sind, diametral einander gegenüberliegend, wobei die Öffnungen (13a, 13b) jeweils eine Längsachse (13a', 13b') aufweisen, die zueinander parallel und radial zur Längsachse (1') der Leitung (1) ausgerichtet sind.

5. Leitung gemäß einem der Ansprüche 1 bis 4, **dadurch gekennzeichnet, daß** die Zwischenkammer (13) mit Trennelementen (16) versehen ist, die so angeordnet sind, daß sie sie längs in mindestens zwei Teile unterteilt, um die Verteilung der zu erwärmenden Luft zu optimieren.

6. Leitung gemäß Anspruch 5, **dadurch gekennzeichnet, daß** die Trennelemente (16) aus länglichen Profilen bestehen, von denen sich jedes radial zwischen den gegenüberliegenden Flächen (10b, 12a) des zentralen Rohrs (10) und des Zwischenrohrs (12) erstrecken, und das über einen Teil der Länge der Zwischenkammer (13).

7. Leitung gemäß Anspruch 6, **dadurch gekennzeichnet, daß** die Trennelemente (16) zwischen zwei und zehn sind und gegeneinander um einen konstanten Winkelbereich versetzt sind.

8. Leitung gemäß einem der Ansprüche 5 bis 7, **dadurch gekennzeichnet, daß** der Teil der Zwischenkammer (13), der in Verlängerung jeder ihrer Öffnungen (13a, 13b) liegt, frei von jeglichen Trennelementen (16) ist.

9. Feuerungsanlage für Wohnraum, die mindestens
(i) ein Holzheizungsgerät (3) vom Typ eines Ofens oder eines Kassetteneinsatzes für Holz,
(ii) einen Kreis (2) mit einer zentralen Kammer (5) zum Abführen von vom Holzheizungsgerät (3) erzeugten Verbrennungsprodukte und eine Umfangskammer (6) zum Zuführen von Verbrennungsluft für das besagte Heizgerät (3) und
(iii) einen Kreis (7) zum Erzeugen eines Stroms zu erwärmender Luft aufweist,
**dadurch gekennzeichnet, daß** die Kreise (2, 7) an eine Leitung gemäß einem der Ansprüche 1 bis 8 angeschlossen sind.

10. Feuerungsanlage für Wohnraum gemäß Anspruch 9, **dadurch gekennzeichnet, daß** der Kreis (7)
- einen Kreisteil (7a), der an den Rohrabschnitt (13d) angeschlossen ist, der eine der Öffnungen (13a) der Zwischenkammer (13) verlängert, wobei der Kreisteil (7a) eine Vorrichtung für gesteuerte Zwangsbelüftung (22) mit doppeltem Luftstrom aufweist, die Luft von außen bis zum besagten Rohrabschnitt (13c) zuführt; und
- einen Kreisteil (7b), der an den Rohrabschnitt (13d) angeschlossen ist, der eine der Öffnungen (13b) der Zwischenkammer (13) verlängert, wobei der Kreisteil (7b) mindestens einen Luftauslaß (20) zum Verteilen von erwärmter Luft in einem der Zimmer des Wohnraums aufweist.

## Claims

1. Conduit for a circuit (2) of a flue installation, wherein the conduit (1) extends vertically or substantially vertically between a lower conduit section (2b) connected to a wood heating appliance (3), of the wood stove or insert type, and an upper conduit section (2a) leading to a building outlet (4), said circuit (2) including - a central chamber (5) for the evacuation of the combustion products generated by said wood heating appliance (3), and - a peripheral chamber (6) for the supply of said heating appliance (3) with combustion air,
wherein said conduit (1) comprises :
(i) a central chamber (11) including two through-orifices, an upper one (11a) and a lower one (11b), both extending coaxially with respect to the axis (1') of said conduit (1), said through-orifices (11a, 11b) being intended to be connected to said central chamber (5) of said evacuation circuit (2) for the circulation of said combustion products to be evacuated,
(ii) a peripheral chamber (15), surrounding said central chamber (11), including two annular through-orifices, an upper one (15a) and a lower one (15b), both extending coaxially with respect to the axis (1') of the conduit (1), said through-orifices (15a, 15b) being intended to be connected to said peripheral chamber (6) of said evacuation circuit (2) for the circulation of the combustion air, and
(iii) an intermediate chamber (13), inserted between said central chamber (11) and said peripheral chamber (15), including at least two through-orifices (13a, 13b), said orifices (13a, 13b) being intended to be connected to a circuit (7) adapted to generated a flow of air through said intermediate chamber (13) and between said through-orifices (13a, 13b), in order to collect and render a part of the heat energy contained in said combustion products by heat energy transfer at least from said central chamber (11) to said intermediate chamber (13),
wherein said conduit (1) also comprises :
- a central tube (10), delimited by an inner surface (10a) defining said central chamber (11) and by an outer surface (10b), wherein said central tube (10) has two ends, an upper one (10c) and a lower one (10d), each defining one of said through-orifices (11a, 11b) of said central chamber (11),
- an intermediate tube (12) within which is housed said central tube (10), wherein said intermediate tube (12), delimited by an inner surface (12a) and an outer surface (12b), has two ends, an upper one (12c) and a lower one (12d), air-tightly fastened to the outer surface (10b) of said associated central tube (10), to define together, between each other, said intermediate chamber (13), wherein said intermediate tube (12) includes said two through-orifices (13a, 13b) of said intermediate chamber (13) that are arranged near said ends (12c, 12d), and
- a peripheral tube (14) within which are housed said central tube (10) and said intermediate tube (12), wherein said peripheral tube (14) is delimited by an outer surface (14b) and by an inner surface (14a),
**characterized in that** said inner surface (14a) defines the peripheral chamber (15) with the opposite tubes (10, 12),
said peripheral tube (14) has two ends, an upper one (14c) and a lower one (14d), arranged remote from the ends (10c, 10d) of said central tube (10) to delimit together said annular through-orifices (15a, 15b) of said peripheral chamber (15),
and **in that** said orifices (13a, 13b) of said intermediate chamber (13) are continued by tube sections (13c, 13d) that run through the peripheral chamber (15) and that lead to the outside through the peripheral tube (14).

2. Conduit according to claim 1, **characterized in that** the upper end (12c) of the intermediate tube (12) has a generally truncated shape, of increasing cross-section from the upper end (12c) to the lower end (12d) of said tube (12,) and **in that** the lower end (14d) of the peripheral tube (14) includes a portion (14d1) of generally truncated shape, of decreasing cross-section from the upper end (14c) to the lower end (14d) of said tube (14), said truncated portions (12c, 14d) optimizing the circulation of the combustion air along the peripheral chamber (15).

3. Conduit according to any one of claims 1 or 2, **characterized in that** the orifices (13a, 13b) of the intermediate chamber (13) are located, one (13a) at, or near, the upper end (12c) of the intermediate tube (12) and the other (13b) at, or near, the lower end (12d) of said intermediate tube (12).

4. Conduit according to any one of claims 1 to 3, **characterized in that** the orifices (13a, 13b) of the intermediate chamber (13) are two in number, diametrically opposite to each other, wherein said orifices (13a, 13b) each include a longitudinal axis (13a', 13b'), parallel to each other and directed radially with respect to the longitudinal axis (1') of said conduit (1).

5. Conduit according to any one of claims 1 to 4, **characterized in that** the intermediate chamber (13) is provided with partitioning elements (16) that are arranged so as to longitudinally divide it into at least two parts, in order to optimize the distribution of the air to be heated.

6. Conduit according to claim 5, **characterized in that** the partitioning elements (16) are consisted of longitudinal profiles each extending radially between the opposite surfaces (10b, 12a) of the central tube (10) and of the intermediate tube (12), over a part of the length of the intermediate chamber (13).

7. Conduit according to claim 6, **characterized in that** the partitioning elements (16) are two to ten in number, offset with respect to each other by a constant angular sector.

8. Conduit according to any one of claims 5 to 7, **characterized in that** the part of the intermediate chamber (13) that is located in continuation of each of its orifices (13a, 13b) is devoid of partitioning elements (16).

9. A flue installation for a house, comprising at least:
(i) a wood heating appliance (3), of the wood stove or insert type,
(ii) a circuit (2) including a central chamber (5), for the evacuation of the combustion products generated by said wood heating appliance (3), and a peripheral chamber (6), for the supply of said heating appliance (3) with combustion air, and
(iii) a circuit (7) for generating a flow of air to be heated, **characterized in that** said circuits (2, 7) are connected to a conduit (1) according any one of claims 1 to 8.

10. The flue installation for a house according to claim 9, **characterized in that** said circuit (7) includes :
- a portion of circuit (7a) connected to the tube section (13c) that continues one of the orifices (13a) of the intermediate chamber (13), wherein said portion of circuit (7a) includes a dual-flow, controlled mechanical ventilation device (22) that bring the air coming from the outside to said tube section (13c), and
- a portion of circuit (7b) connected to the tube section (13d) that continues the other orifice (13b) of the intermediate chamber (13), wherein said portion of circuit (7b) includes at least one vent (20) for the diffusion of heated air into one of the house rooms.
